# EUROPÄISCHE PATENTSCHRIFT

(11) **EP 0 868 539 B1**
(45) Veröffentlichungstag und Bekanntmachung des Hinweises auf die Patenterteilung: **01.08.2001**
(21) Anmeldenummer: 96942180.9
(22) Anmeldetag: 20.12.1996
(51) Int. Cl.: C22C 21/00, F16C 33/12

(54) **GLEITLAGERWERKSTOFF AUS EINER BIS AUF ERSCHMELZUNGSBEDINGTE VERUNREINIGUNGEN SILICIUMFREIEN ALUMINIUMLEGIERUNG**
PLAIN BEARING MATERIAL OF AN ALUMINIUM ALLOY FREE FROM SILICON EXCEPT FOR IMPURITIES INTRODUCED DURING SMELTING
MATERIAU POUR PALIERS LISSES EN UN ALLIAGE D'ALUMINIUM EXEMPT DE SILICIUM, A L'EXCEPTION D'IMPURETES INTRODUITES PENDANT LA FONTE

(30) Priorität: 20.12.1995 AT 206595
(43) Veröffentlichungstag der Anmeldung: 07.10.1998
(73) Patentinhaber: Miba Gleitlager Aktiengesellschaft, 4663 Laakirchen (AT)
(72) Erfinder: MERGEN, Robert, A-4600 Wels (AT)
(74) Vertreter: Secklehner, Günter, Dr.
(86) Internationale Anmeldenummer: AT9600259
(87) Internationale Veröffentlichungsnummer: WO9722725

(56) Entgegenhaltungen:
- DE-A- 3 000 773
- DE-A- 3 640 698
- DE-A- 4 004 703
- DE-A- 4 231 862
- DE-A- 4 332 433
- US-A- 4 471 032

## Beschreibung

Die Erfindung bezieht sich auf einen Lagerwerkstoff entsprechend Anspruch 1, einen damit hergestellten Verbundwerkstoff entsprechend Anspruch 14, ein Gleitlager entsprechend Anspruch 20 sowie auf ein Verfahren zur Herstellung von Verbundwerkstoffen aus einer Aluminiumlegierung, wie es im Oberbegriff des Anspruches 28 beschrieben ist.

Um die Nachteile siliciumhältiger Aluminium-Zinnlegierungen hinsichtlich einer geringeren Ermüdungsfestigkeit aufgrund der Kerbwirkung der Siliciumpartikel einerseits und der spanabhebenden Wirkung der Siliciumpartikel im Bereich der Gleitfläche andererseits zu vermeiden, wird häufig auf die Zulegierung von Silicium verzichtet. Um die mechanischen Eigenschaften von auch siliciumfreien Aluminiumlegierungen mit einem hohen Zinngehalt von 35 bis 65 Gew% zu verbessern, wurde bereits vorgeschlagen - gemäß DE 42 31 862 A - neben 0,1 bis 1,5 Gew% Kupfer zur Verbesserung der Ermüdungsbeständigkeit einerseits Blei und Wismut in einer Menge von insgesamt 0,5 bis 10 Gew% und andererseits wenigstens eines der Elemente Mangan, Nickel, Silber, Magnesium, Antimon und Zink in einer Gesamtmenge von höchstens 5 Gew% zuzulegieren. Wegen des hohen Zinngehaltes bildet sich jedoch beim Erstarren der Legierung aus der Schmelze ein im wesentlichen zusammenhängendes Zinn-Netz aus, das die strukturelle Festigkeit des Gleitlagerwerkstoffes sowie die Umformbarkeit erheblich beeinträchtigt, was im Hinblick auf die übliche Plattierung dieser gegossenen Legierungen mit Stahl und den damit zusammenhängenden Umformschritten von Bedeutung ist. Außerdem nimmt mit steigendem Zinngehalt die Netzstruktur des Zinns in der Aluminiummatrix zunehmenden Einfluß auf die mechanischen Eigenschaften des Gleitlagerwerkstoffes.

Weiters wurde auch bereits versucht, die mechanischen Eigenschaften von Aluminium-Zinnlegierungen zu verbessern, indem man diesen Legierungen wohlbekannte matrixverstärkende Elemente, wie z.B. Kupfer, Mangan, Nickel, Magnesium und Zinn, beisetzt. Derartige Aluminium-Zinnlegierungen sind unter anderem aus der DE 42 01 793 A bekannt.

Des weiteren ist es bereits bekannt - gemäß DE 32 49 133 C - in Aluminium-Zinnlegierungen durch thermische Nachbehandlung eine heterogene Struktur zu erzeugen. Durch diese Nachbehandlungen werden Hartteilchen, z.B. Silicium oder Aluminide, ausgeschieden, die bei ganz bestimmten Verteilungsfunktionen günstige Verschleißeigenschaften ermöglichen.

Bei gegossenen Legierungen - gemäß DE 36 40 698 C - ist es zur Einstellung der Endabmessung der einzelnen Schichten unter Umformung bei der Plattierung mit Stahl erforderlich, verschiedene Umformschritte vorzunehmen, die auch damit in Verbindung unterschiedliche Wärmebehandlungen erfordern. Diese Verbundherstellung und insbesondere die verschiedenen Umformschritte haben bisher den Einsatz von festigkeitssteigernden Legierungsmaßnahmen meist verhindert.

Aus der DE 40 04 703 A ist ein Schichtwerkstoff für Gleitlagerelemente mit einer Antifriktionsschicht aus einem Lagerwerkstoff auf Aluminiumbasis bekannt, der zwischen 1 Gew.-% und 3 Gew.-% Nickel 0,5 - 2,5 Gew.-% Mangan und 0,02 - 1,5 Gew.-% Kupfer sowie zwischen 0,5 Gew.-% und 20 Gew.-% Zinn enthält. In der aus AlNiMnCu - Mischkristallen bestehenden Matrix sind Hartteilchen eingelagert. Die Zinnphase liegt in Form von in der Matrix dispergierten Zinnteilchen vor. Die Hartteilchen selbst weisen eine Teilchengröße von überwiegend ≤ 5 µm auf, wobei weniger als 5 Hartteilchen mit einer Teilchengröße ≥ 5 µm in einem Volumenelement eines Würfels von 0,1 mm Kantenlänge vorhanden sind. Die Hartteilchen sind in einer Menge von in etwa 20 - 30 % - bezogen auf das Gewicht der Matrixlegierung - und lokalisiert vorwiegend an den Korngrenzen der AlNiMnCu - Mischkristalle. Durch diese Legierung soll ein ermüdungsfreier Lauf eines daraus gebildeten Schichtwerkstoffes ermöglicht werden, der unter anderem auf die Affinität von Nickel und Mangan zu Zinn und die daraus resultierende bessere Anbindung der Zinnphase an die Aluminiummatrix zurückgeführt wird. Aufgrund des Umstandes, dass die Zinngehalte im für zum Anmeldezeitpunkt dieser DE - A unteren Mengenbereich für derartige Lagerlegierungen liegt - vorzugsweise werden zwischen 5 und 15 Gew.-% zugesetzt - zeigt das Gefüge keine ausgeprägte Zinn-Netzwerkstrukutr, welche eine bedeutende Senkung der Festigkeit der Legierungen bewirkt.

Aus der DE 43 32 433 A ist ein Mehrschichtgleitlager enthaltend eine Aluminium-Zinn-Legierungsschicht bekannt, welche eine hohe Ermüdungsbeständigkeit und Paßfähigkeit aufweist. Wiederum weist diese Aluminiumlegierung für die Laufschicht relative geringe Zinngehalte - 7 Gew.-% bis 20 Gew.-% auf und wird insbesondere hervorgehoben, dass ein 20 Gew.-% übersteigender Anteil an Zinn die mechanischen Eigenschaften der Lagerlegierung verschlechtert und eine solche Lagerlegierung unter den harten Bedingungen z.B. eines Hochleistungsmotors nicht verwendet werden kann. Zurückzuführen ist dieser Umstand auf das bereits erwähnte sich ausbildende Zinn-Netz bei höheren Zinngehalten.

Der Erfindung liegt die Aufgabe zugrunde, eine Aluminiumlegierung zu schaffen, deren mechanische Eigenschaften auch bei höheren Zinngehalten deutlich besser sind.

Die Aufgabe wird durch die Merkmale im Anspruch 1 gelöst. Der überraschende Vorteil, der bei der speziellen Zusammensetzung der Aluminiumlegierung festgestellt werden konnte, liegt nun darin, daß die durch die Zugabe des hohen Zinnanteils erzielte Matrixfestigkeit durch die Zugabe von Hartstoffen der angegebenen Art erheblich erhöht werden konnte. Damit ist es auch gelungen, daß in den Grenzbereichen der Matrix intermetallische Phasen, d.h. harte Phasen bzw. Aluminide ausgeschieden werden. Diese an sich störenden, intermetallischen Phasen konnten jedoch in überraschender Weise durch die Zugabe der weiteren Legierungselemente so verändert werden, daß sie eine kugelige oder würfelförmige Form aufweisen und somit die Zinnstruktur in den Grenzbereichen der Matrix unterbrechen und zu einer Verfestigung der Matrix führen, andererseits die bekannten Nachteile von länglichen, stengelförmigen intermetallischen Phasen nicht auftreten. Völlig unvorhersehbar wird dadurch noch der zusätzliche Vorteil erreicht, daß durch die aufgrund der speziellen Bestandteile gebildeten intermetallischen Phasen auch das Benetzungsverhalten derselben mit Zinn herabgesetzt wird, sodaß das Zinn in der erstarrten Schichte nicht mehr als zusammenhängendes Zinn-Netz, sondern vielmehr in der Art eines speziellen, diesen besonderen intermetallischen Phasen angekoppelten Dispergats vorliegt. Dadurch können bereits im Gußzustand höhere Härtewerte erreicht werden und wird dabei auch durch die bessere Kontinuität der Matrix eine Steigerung der Umformbarkeit in überraschender, nicht vorhersehbarer Weise erreicht.

Der hohe Zinnanteil, insbesondere in der Lagerschichte gemäß Anspruch 2 ermöglicht vorteilhaft günstige Gleiteigenschaften und vor allem auch hohe Notlaufeigenschaften, die der Lebensdauer solcher Gleitlager besonders zugute kommen, ohne daß die Festigkeit der Matrixlegierung dadurch nachteilig beeinflußt wird.

Eine hohe Gesamtfestigkeit bei guten Laufeigenschaften wird auch durch die Weiterbildung nach Anspruch 3 erzielt, da bei der Zumengung der dort angegebenen Elemente in der entsprechenden Menge eine gute Kombinationswirkung zwischen Festigkeit und Dauerbelastbarkeit erreicht werden kann.

Die Ausscheidung der intermetallischen Phasen kann aber auch anhand der detaillierten Angaben in den Ansprüchen 4 bis 7 erreicht werden, wobei durch die unterschiedliche Vorgangsweise jeweils unterschiedliche Zusatzanforderungen an höhere Druck- bzw. Temperaturbelastung erfüllt werden können.

Durch die Weiterbildung nach den Ansprüchen 8 oder 9 wird einerseits eine ausreichende Härte der Matrixfestigkeit erzielt, andererseits ermöglicht die Zugabe zusätzlicher Legierungsbestandteile, daß die sich bildenden intermetallischen Phasen in ihrer Raumform noch beeinflußt werden können.

Eine andere Ausführungsform beschreibt Anspruch 10, wobei ebenfalls eine hohe Festigkeit erzielt werden kann.

Eine Bildung der intermetallischen Phasen in einer gewünschten Raumform kann aber auch durch die weiteren Ausführungsvarianten gemäß den Ansprüchen 11 bis 13 erzielt werden.

Die Aufgabe der Erfindung wird aber auch durch den Verbundwerkstoff nach Anspruch 14 gelöst. Durch die Verwendung des Hauptlegierungselementes Zinn für die Laufschichte und Zink für die Zwischenschichte können bei einer Aluminiumlegierung für einen Verbundwerkstoff die Gleiteigenschaften und die Anpassungsfähigkeit der Materialien bei der Einlaufphase der Lager einerseits und die ausreichend hohe Festigkeit und Stützung der Lagerschicht durch die mit Zink verstärkte Zwischenschichte verbessert werden.

Vorteilhaft ist aber auch eine weitere Ausgestaltung des Verbundwerkstoffes nach Anspruch 15, da durch die Anpassung der Festigkeitsänderungen in der Zwischenschichte und in der Laufschichte die sich zwischen den beiden Schichten aufbauenden Spannungen und Zusatzbelastungen reduziert werden und die ohnehin kritische Verbindung zwischen den einzelnen Schichten, die durch Umformvorgänge und Walzvorgänge hergestellt worden ist, nicht zusätzlich belastet wird.

Durch eine andere Weiterbildung gemäß Anspruch 16 kann durch die gleichzeitige Ausbildung der Lauf- und Zwischenschichten als aushärtbare Schichten auch bei den zwischen den einzelnen Schichten erforderlichen Wärmebehandlungsvorgängen eine zusätzliche Erhöhung der Festigkeit erreicht werden. Vor allem durch die damit erzielte Kombination der in Richtung des Tragkörpers aus Stahl zunehmenden Festigkeit der Werkstoffe wird die äußerst günstige Gleiteigenschaften aufweisende Lagerschichte durch die höher feste Zwischenschichte in optimaler Weise unterstützt, sodaß eine verbesserte Kombinationswirkung auftritt.

Möglich ist dabei eine Ausbildung nach Anspruch 17, weil dadurch ein den Anforderungen in einem hohen Belastungsbereich entsprechender Verbund der Schichten erreicht wird und darüber hinaus die jeweils zweckmäßigsten Fertigungsverfahren einsetzbar sind.

Vorteilhaft ist weiters eine Ausbildung nach den Ansprüchen 18 oder 19, wodurch die einsatzbedingte Aushärtung in einen Bereich verläuft, bei dem eine Überschreitung der maximal möglichen Härte vermieden wird.

Vorteilhaft ist aber auch die Ausbildung eines Gleitlagers zur bevorzugt eigenständigen Lösung der Aufgabe gemäß Anspruch 20. Durch die Verwendung des Lagerwerkstoffes wird eine hohe Standzeit und eine günstige Anpassung des Lagers an unterschiedliche Toleranzen erschaffen.

Bei der Weiterbildung nach Anspruch 21 können in Verbindung mit der Verwendung von Zinn als Legierungsmaterial für die Lagerschichte zusätzliche Vorteile erzielt werden.

Durch den gleichen Matrixaufbau der Lauf- und Zwischenschichte nach Anspruch 22 wird eine gute Verbindung zwischen den beiden sichergestellt und auch eine gute Notlaufeigenschaft erreicht, wobei durch diesen speziellen Matrixaufbau trotzdem eine gute Verbindung zwischen der Zwischenschichte und einer aus Metall bestehenden Stützlage bei den Umformvorgängen und beim Plattieren erzielbar ist.

Die Erfindung umfaßt weiters auch ein Verfahren zur Herstellung von Verbundwerkstoffen aus Aluminiumlegierungen, wie es im Oberbegriff des Anspruches 23 beschrieben ist. Dieses Verfahren ist durch die einzelnen Maßnahmen im Kennzeichenteil des Anspruches 23 gekennzeichnet. Durch diese Vorgangsweise wird sichergestellt, daß eine ausreichende Matrixverfestigung und eine den gewünschten Festigkeits- und Laufeigenschaften entsprechende Unterbrechung der Zinnstruktur erreicht wird und die Herstellung der Aluminiumlegierung mit den bekannten Verfahren und Vorrichtungen möglich ist.

Vorteilhaft sind auch weitere Verfahrensabläufe, wie sie in den Ansprüchen 25 und 26 angegeben sind, da dadurch durch Diffusion und Substitutionsprozesse die Ausbildung der intermetallischen Phasen noch verändert werden kann.

Auch der thermo-mechanische Nachverdichtungsprozeß gemäß dem Vorgehen nach Anspruch 27 oder 28 ermöglicht eine exakte Anpassung der Festigkeit der Schichten.

Gemäß einem vorteilhaften Vorgehen nach Anspruch 29 oder 30 wird eine Ausgangsfestigkeit erzielt, bei der während der Einlaufzeit eines derartigen Gleitlagers eine Nachverfestigung eintreten kann, die zur Erreichung einer hohen Laufzeit maßgeblich ist.

Die Erfindung wird nachfolgend anhand der Darstellungen in den Zeichnungen näher erläutert.

Es zeigen:
- Fig. 1: ein schematisches Schliffbild eines herkömmlichen Lagerwerkstoffes für Gleitlager auf Aluminiumbasis nach dem Stand der Technik;
- Fig. 2: ein schematisches Schliffbild eines erfindungsgemäßen Lagerwerkstoffes;
- Fig. 3: eine räumliche Darstellung unterschiedlich ausgebildeter Aluminide in ihrem Ausgangs- und Endzustand;
- Fig. 4: ein erfindungsgemäßes Gleitlager, ausgebildet als Halbschale in einem Zwei-Schichtaufbau, in schematischer Darstellung;
- Fig. 5: ein weiteres erfindungsgemäßes Gleitlager, ausgebildet als Halbschale in Drei-Schichtbauweise, in schematischer Darstellung;
- Fig. 6: ein Schaubild für das Lagerstandverhalten von Gleitlagen mit auf eine Stahllage aufplattierten Lauf- und Zwischenschichten aus unterschiedlichen Aluminiumlegierungen bei sich über die Laufzeit ändernder Lagerbelastung;
- Fig. 7: ein Schaubild, welches den Härteverlauf in den einzelnen Schichten eines Gleitlagers über die Betriebszeit zeigt;
- Fig. 8: ein Schaubild entsprechend der Fig. 7 für ein Gleitlager mit erfindungsgemäß ausgebildeten Schichten.

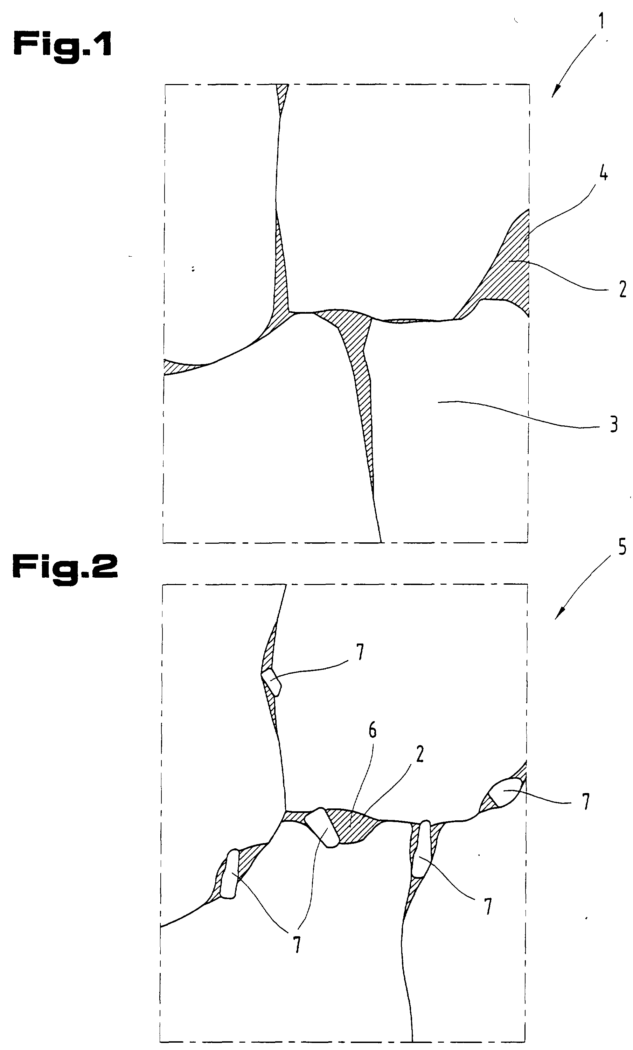

Wie die Fig. 1 erkennen läßt, die einen üblichen aus dem Stand der Technik bekannten Werkstoff 1 für Gleitlager auf Aluminiumbasis mit 20 Gew.-% Zinn und 1 Gew.-% Kupfer zeigt, bildet die Zinnphase 2 in der Legierungsmatrix 3 ein im wesentlichen zusammenhängendes Zinn-Netz 4, das die mechanischen Eigenschaften dieses Werkstoffes 1 nachteilig beeinflußt.

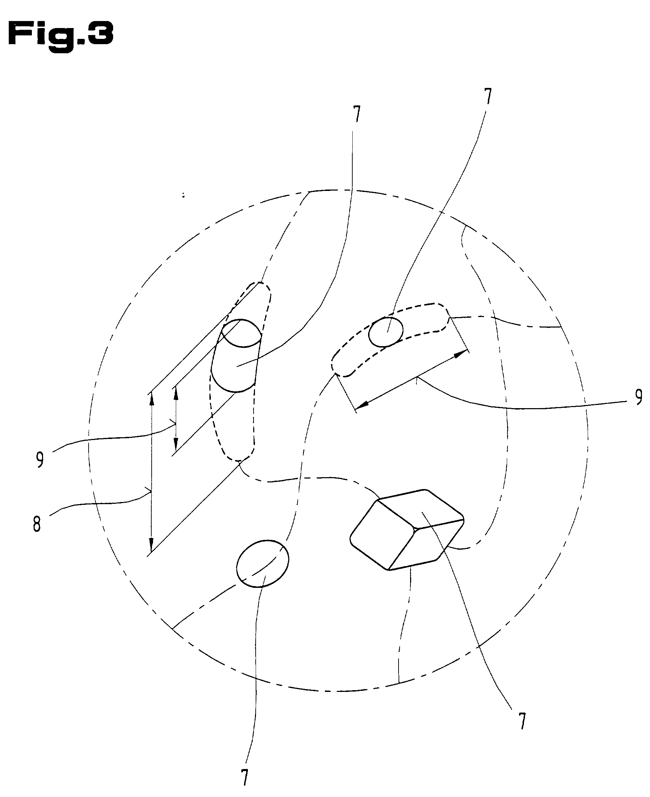

Diese Netzstruktur konnte bei einem erfindungsgemäßen Lagerwerkstoff 5 für Gleitlager aufgebrochen werden, wie dies in Fig. 2 und 3 veranschaulicht ist.

Der dargestellte erfindungsgemäße Lagerwerkstoff 5 enthält neben 23 Gew.-% Zinn 1,8 Gew.-% Kupfer, 0,6 Gew.-% Mangan, 0,23 Gew.-% Eisen, 0,17 Gew.-% Kobalt, 0,14 Gew.-% Chrom und 0,15 Gew.-% Zirkon. Trotz des höheren Zinnanteiles ergibt sich eine deutlich weniger zusammenhängende Zinnstruktur 6, weil die ausgeschiedene Zinnphase 2 durch Aluminide 7 bzw. intermetallische Phasen aus Mangan und Eisen unterbrochen ist, an die sich die Zinnphase 2 anlegt. Wie besser aus Fig. 3 zu ersehen ist, wirken sich diese Aluminide 7 trotz ihrer Zusammensetzung nicht nachteilig auf die mechanischen Eigenschaften des Lagerwerkstoffes 5 aus, weil durch die Zugabe von Mangan und/oder Kobalt und/oder Chrom und/oder Zirkon in abgestimmten Mengen, die sonst durch eine ausgeprägte Längserstreckung 8 der in strichlierten Linien dargestellten Aluminiden 7 verursachte Kerbwirkung durch deren Veränderung in die dargestellte kugelige bzw. würfelige Raumform und kürzere Hauptabmessung bzw. Länge 9 unterbunden werden konnte.

Selbstverständlich kann auch der erfindungsgemäße Lagerwerkstoff 5 einer üblichen Wärme- und Umformnachbehandlung unterworfen werden, um die mechanischen Eigenschaften weiter zu verbessern. Dabei können durch die Wirkung einer entsprechenden plastischen Verformung die Aluminide 7 bei einer vergleichsweise niedrigen Behandlungstemperatur in Lösung gebracht werden, um dann den Lagerwerkstoff 5 zum Zwecke einer Ausscheidungshärtung einer Anlaßbehandlung unterziehen zu können.

Um die besonderen Eigenschaften des erfindungsgemäßen Lagerwerkstoffes 5 zu zeigen, wurde ein solcher Lagerwerkstoff 5 mit einem üblichen Werkstoff 1 eines Gleitlagers verglichen. Zu diesem Zweck wurden die zu vergleichenden Werkstoffe unter übereinstimmenden Bedingungen in einem horizontalen Strangguß zu einem Band gegossen, das einen Querschnitt von 10 mm x 100 mm aufwies.

Aufgrund der gewählten Abzugsbedingungen wurde jeweils eine Wärmeabfuhr zwischen 3,4 und 3,7 J/s für die Erstarrung sichergestellt.

Der übliche Werkstoff 1 bestand neben Aluminium als Hauptlegierungsbestandteil aus 20 Gew.-% Zinn, 0,9 Gew.-% Kupfer und den sonst in Aluminium üblichen Verunreinigungen.

Die erfindungsgemäße Legierung bzw. der Lagerwerkstoff 5 wies neben Aluminium als Hauptlegierungsbestandteil 23 Gew.-% Zinn, 1,8 Gew.-% Kupfer, 0,6 Gew.-% Mangan, 0,23 Gew.-% Eisen, 0,14 Gew.-% Chrom, 0,17 Gew.-% Kobalt, 0,15 Gew.-% Zirkon und den sonst in Aluminium üblichen Verunreinigungen auf. Bei dem Lagerwerkstoff 5 lag das Zinn-Netz 4 im Gegensatz zur Vergleichslegierung in einer im wesentlichen unterbrochenen Form vor, sodaß bei der erfindungsgemäßen Legierung trotz des deutlich höheren Zinngehaltes eine bessere Strukturfestigkeit festgestellt werden konnte. Demgemäß konnte eine Zunahme der Brinellhärte im Gußzustand von wenigstens 5 Punkten gemessen werden.

Zur Überprüfung der Verformbarkeit wurden beide Werkstoffe einer Glühbehandlung von 3 Stunden bei 350°C unterworfen. Nach einem anschließenden Fräsen zur Befreiung der Proben von der Gußhaut wiesen die Proben einen Querschnitt von 8 mm x 80 mm auf. Bei einer Walzverformung ohne Zwischenglühen ließ der herkömmliche Werkstoff 1 lediglich eine Verformung von maximal 25 % in einem einzelnen Stich zu, wobei bereits erste Risse entstanden, die bei einer Stichabnahme bis zu 35 % zu nicht mehr weiterverwertbaren Bändern führten.

Bei dem erfindungsgemäßen Lagerwerkstoff 5 konnten zwar bereits bei einer Verformung von 20 % erste Risse erkannt werden, doch wuchsen diese Risse mit zunehmender Stichstärke erheblich langsamer, so daß bei einer Stichabnahme von 40 % das Band bis auf einen schmalen Randbereich noch ohne weiteres verwendet werden konnte.

Ein weiterer Umformversuch bestand in der Prüfung der ohne Zwischenglühen statthaften Anzahl hintereinander durchgeführter Walzoperationen mit konstanter Stichabnahme von jeweils 5 %. Bei dem bisher üblichen Werkstoff 1 mußte die Verformung nach 8 bis 10 Stichen eingestellt werden. Dies entspricht einer maximalen Gesamtverformung von knapp mehr als 40 %. Durch nach jedem Stich durchgeführte Härtemessungen an der gewalzten Oberfläche konnte beobachtet werden, daß die Vergleichslegierung bereits nach 6 Stichen eine maximale Härte erreicht hatte. Bei den folgenden Stichen konnte sogar ein teilweises Absinken der Härte festgestellt werden, was auf eine Strukturschädigung schließen läßt.

Bei dem erfindungsgemäßen Lagerwerkstoff 5 konnte im Gegensatz dazu ein besonders starkes Anwachsen der Härte bis zum 8. Walzstich gemessen werden, wonach die Härte bis zum 12. bis 14. Walzstich konstant blieb und erst ab dem 13. bis 15. Walzstich abnahm. Bei einer entsprechenden Gesamtverformung von 48 % bis 53 % war eine weitere Verformung rissebedingt nicht mehr möglich.

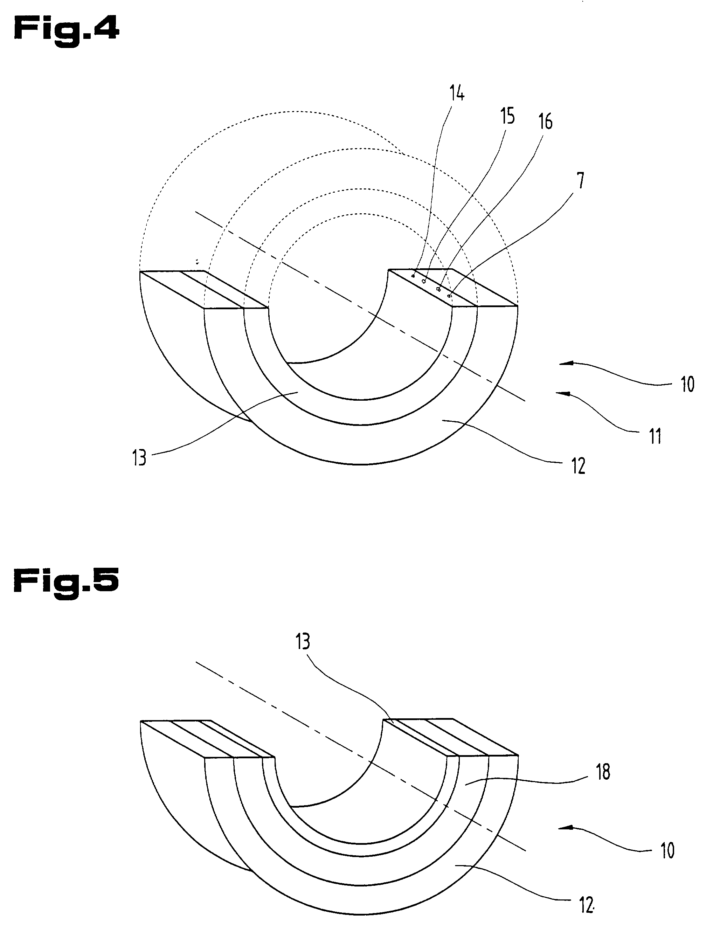

In der Fig. 4 ist eine mögliche Ausbildung eines halbschalenförmigen Lagerelementes 10 eines Gleitlagers 11 gezeigt, bei dem das Lagerelement 10 aus einer Stützlage 12, die üblicherweise aus einem metallischen Werkstoff, zum Beispiel Stahl, hergestellt ist, besteht und die eine Aufnahme für eine halbschalenförmige Laufschichte 13 bildet. Zur Bildung von Gleitlagern 11, die der drehbeweglichen Lagerung von Maschinenwellen, Motorwellen etc. dienen, werden zwei derartige gleichartige Lagerelemente 10, wie in strichlierten Linien gezeigt, zu einem Lagerring zusammengesetzt und üblicherweise in ein diesen Lagerring aufnehmendes Lagergehäuse entsprechend paßgenau und verdrehgesichert eingesetzt.

Die Laufschichte 13 ist mit der Stützlage 12 bewegungsfest verbunden, zum Beispiel aufplattiert, aufgewalzt, verschweißt, verklebt etc. und besteht nach der erfindungsgemäßen Ausführung bevorzugt aus einer Aluminiumlegierung mit einer Reihe möglicher Legierungselementen zur Erzielung einer hohen Lagerbelastbarkeit in bezug auf Temperatur, Festigkeit, Laufzeit bei einer minimierten Reibungszahl in Verbindung mit geeigneten Werkstoffen für die Maschinenwellen, Motorwellen, etc.

Nach einer bevorzugten Ausführung besteht die Laufschichte 13 aus einer Aluminiumlegierung, der als Hauptlegierungselement Zinn 14 und ein Hartstoff 15 aus zumindest einem Element 16 einer Eisen, Mangan, Nickel, Chrom, Kobalt, Kupfer bzw. Platin, Magnesium, Antimon enthaltenden ersten Elementengruppe zugesetzt ist. Dabei ist der Aluminiumlegierung von der ersten Elementengruppe eine Menge an Elementen 16 zugesetzt, sodaß es in den Grenzbereichen der Matrix zur Bildung intermetallischer Phasen, z.B. Aluminiden 7, kommt. Indem weiters zumindest ein weiteres Element 16 aus einer zweiten Mangan, Antimon, Chrom, Wolfram, Niob, Vanadium, Kobalt, Silber, Molybdän oder Zirkonium enthaltenden Elementengruppe zugesetzt wird, wird zumindest ein Teil des Hartstoffes 15 der ersten Elementengruppe substituiert, wodurch die Aluminide 7 auf eine annähernd kugel- bzw. würfelförmige Raumform umgeformt werden.

Weiters kann in der erfindungsgemäßen Aluminiumlegierung zumindest ein Element 16 aus der Gruppe Calzium, Lithium, Silicium und Titan enthalten sein.

In der Fig. 5 ist ein anderes Lagerelement 10 mit der Stützlage 12 und der Laufschichte 13 gezeigt, bei dem zwischen der Stützlage 12 und der Laufschichte 13 eine Zwischenschichte 18, gegebenenfalls als Mittelschichte oder Bindungsschichte bezeichnet, angeordnet ist. Die Zwischenschichte 18 mit der mit dieser bewegungsfest verbundenen Laufschichte 13 bilden bei dieser Ausführung durch Abstimmung ihrer Legierungsbestandteile, wobei die Zwischenschichte 18 bevorzugt durch eine Aluminiumlegierung gebildet ist, einen Verbundwerkstoff aus, der maßgeblich die für das Lagerelement 10 angestrebten Eigenschaften beeinflußt.

Nach einer weiteren bevorzugten Ausbildung für einen Verbundwerkstoff, insbesondere für ein Gleitlager 11 aus einer Laufschichte 13 und einer Zwischenschichte 18 enthalten diese als Hauptlegierungsbestandteile zumindest ein Element 16 aus einer Zinn, Zink, Kupfer, Blei, Wismut, Kadmium und/oder Indium enthaltenden Legierungselementengruppe, wobei das Hauptlegierungselement der Laufschichte 13 Zinn 14 und der Zwischenschichte 18 Zink ist. Zumindest ein Element einer weiteren Eisen, Mangan, Kupfer, Nickel, Chrom enthaltenden Legierungselementengruppe wird zugesetzt, um eine Differenz zwischen den Festigkeitsänderungen in der Laufschichte 13 und der Zwischenschichte 18 bei annähernd gleicher Druck- und/oder Temperaturbelastung zwischen 0 % und 20 % einzuhalten. Des weiteren sind die Laufschichte 13 und die Zwischenschichte 18 aushärtbar. Eine Festigkeit der Zwischenschichte 18 ist gleich oder höher als die Festigkeit der Laufschichte 13.

Eine weitere bevorzugte Ausbildung für einen Verbundwerkstoff, insbesondere für ein Gleitlager 11, bestehend aus der Laufschichte 13 und der Zwischenschichte 18, enthält als Hauptlegierungsbestandteile zumindest ein Element aus einer Zinn, Zink, Kupfer, Blei, Wismut, Kadmium und/oder Indium enthaltenden Legierungselementengruppe. Dieser Verbundwerkstoff, der zumindest einen Teil eines Gleitlagers 11 bildet, ermöglicht die Ausbildung der Zwischenschichte 18 und/oder der Laufschichte 13, sodaß sie eine Festigkeit aufweisen, die 70 % bis 99,5 % der Spitzenfestigkeit der jeweiligen Laufschichte 13 oder der Zwischenschichte 18 beträgt.

Aus dem Stand der Technik ist es selbstverständlich auch bekannt, Gleitlager 11 in geschlossener Ringbauweise herzustellen, wobei diese entsprechend vorgegebener Rohmaße als Ring gegossen werden oder von einem Walzprofil oder Strangprofil zu entsprechenden Ringen umgeformt und an den sich dabei ergebenden Stoßstellen an den einander gegenüberliegenden Stirnenden zur Bildung eines ununterbrochenen Ringes verbunden insbesondere verschweißt werden. Auch für derartige Gleitlager 11 sind die vorgenannten Werkstoffe 1 für die Zwischenschichte 18 und/oder Laufschichte 13 verwendbar.

Derartige Gleitlager 11 werden vielfach in einer Verbundwerkstofftechnik hergestellt, bei der die unterschiedlichen Schichten bevorzugt durch Aufplattieren miteinander bewegungsfest verbunden sind. Derartige in Bandform oder in Ringform vorgefertigte Gleitlager 11 werden durch nachfolgendes Feinstbearbeiten auf die jeweiligen Abmaße mit entsprechenden Lagertoleranzen und Einbautoleranzen gebracht und mit Methoden der Befestigungstechnik in Lageraufnahmen von Lager oder Motorengehäuse eingesetzt und durch Sicherungselemente fixiert bzw. auch durch ein Kleben verdrehsicher gehalten.

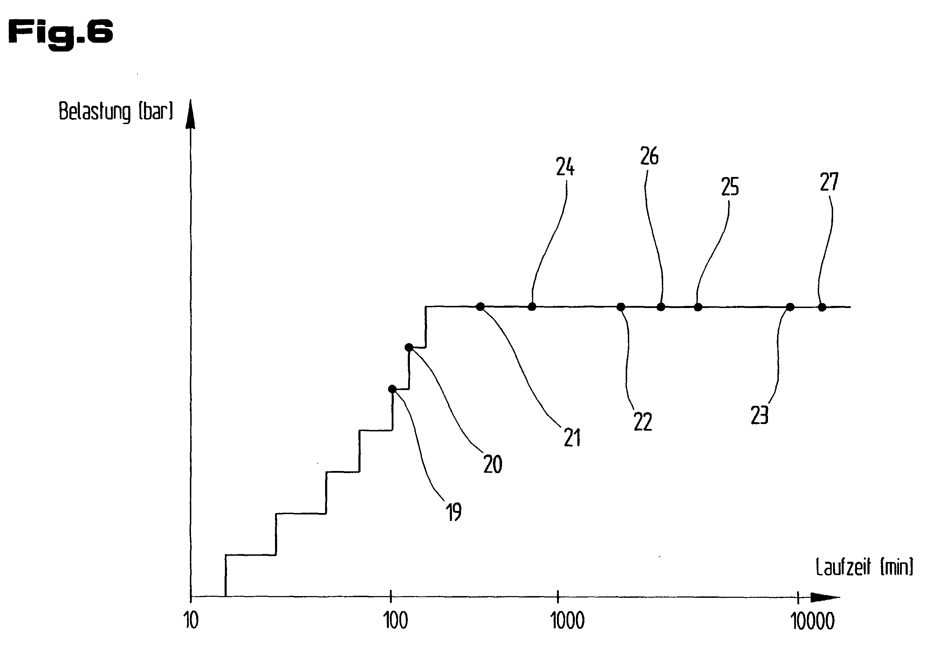

In Fig. 6 ist ein Schaubild gezeigt, bei welchem auf der Ordinate die Belastung in bar und auf der Abszisse die Laufzeit in Minuten mit einer logarithmischen Teilung aufgetragen ist.

Wie bekannt, kommt es durch die Belastung des Lagerelementes 10, insbesondere der Temperatur- und/oder Druckbelastung während einer sogenannten Einlaufphase und auch danach zu einer Veränderung der Festigkeit, wobei die Veränderung von den Legierungsbestandteilen abhängt. Nach dieser sogenannten Einlaufzeit und dem Erreichen bestimmter Grenzwerte treten bis zum Erreichen eines Laufzeitendes, an dem durch Materialermüdung ein derartiges Lager verwendungsunfähig wird, keine weiteren wesentlichen Veränderungen in der Festigkeit auf.

Anhand der nachfolgend beschriebenen Beispiele von unterschiedlichen Schichtaufbauten für derartige Gleitlager 11 wird der erfindungsgemäße Lageraufbau und die Auswirkung auf das Lagerstandverhalten erläutert.

Beispiel 1: Bei diesem Gleitlager 11 ist die Stützlage 12 aus einem Stahl gebildet und besteht die Laufschichte 13 aus einer Aluminiumlegierung, insbesondere aus AlZn4,5, die mit der Stützlage 12 bewegungsfest verbunden ist.

Beispiel 2: Bei diesem Gleitlager 11 ist die Stützlage 12 aus einem Stahl gebildet. Auf der Stützlage 12 ist die Zwischenschichte 18 aus Reinaluminium und auf dieser die Laufschichte 13 aus einer Aluminium-Zinn-Legierung, zum Beispiel AlSn6Cu oder AlSn20Cu, aufgebracht.

Beispiel 3: Bei diesem Gleitlager 11 ist die Stützlage 12 aus einem Stahl gebildet. Auf der Stützlage 12 ist die Zwischenschichte 18 aus einer CuPb-Legierung und auf dieser die Laufschichte 13 aus AlSn20 gesputtert.

Beispiel 4: Bei diesem Aufbau eines Gleitlagers 11 besteht die Stützlage 12 aus Stahl. Bei der ersten Ausführungsvariante ist auf diese Stützlage 12 aus Stahl eine Zwischenschichte 18 aus Reinaluminium aufgebracht und diese wiederum mit einer erfindungsgemäßen Laufschichte 13 verbunden.

Um nun das Lagerstandverhalten eines Gleitlagers 11 überprüfen zu können und verschiedenen Einsatzkategorien zuzuteilen, kann das Lagerstandverhalten anhand von vorbestimmten Prüfverfahren festgestellt und überprüft werden. Zum Simulieren des Lastverlaufes wird beispielsweise bei einem mit einer vorbestimmten Drehzahl rotierenden Welle die auf das Lagergehäuse einwirkende Last aufgebracht, wobei z. B. in Abhängigkeit von der Lagergröße in der verwendeten Zylindergröße mit einem Hydraulikdruck von 75 bar gearbeitet werden kann. Ist dann die Maximallagerbelastung erreicht, wird der Versuch so lange fortgeführt, bis das Lager durch Verquetschung der Laufschichte 13 oder Gratbildung im Bereich der Lauf- bzw. Zwischenschichte 13, 18 oder durch Verreiben so beschädigt ist, daß es ausgetauscht werden muß. Die Definition, ab wann diese Schäden so bewertet werden, daß das Lager nicht mehr verwendbar ist, ist vor jeder einzelnen Versuchsreihe im Detail festzulegen.

In dem Schaubild ist nunmehr das Lagerstandverhalten der zuvor anhand der Beispiele 1 bis 4 beschriebenen Ausbildungen der einzelnen Gleitlager 11 gezeigt.

Wie nun eine Betrachtung des Schaubildes zeigt, das u.a. das Lagerstandverhalten eines aus dem Stand der Technik bekannten, einfachen Gleitlagers 11 nach Beispiel 1 darstellt, fällt ein derartiges Gleitlager 11 bereits vor Erreichen der Maximalbelastung zum Zeitpunkt 19 - wie im Schaubild gezeigt - durch Verreiben der Lagerstelle aus.

Ein besseres Lagerstandverhalten wird bereits mit einer ebenfalls aus dem Stand der Technik bekannten Ausgestaltung eines Gleitlagers 11 mit einem Dreischichtaufbau erreicht, bei dem die Stützlage 12 aus Stahl, die Zwischenschichte 18 aus Reinaluminium und die Laufschichte 13 aus einer mit Zinn 14 legierten Aluminiumlegierung - gemäß Beispiel 2 - gebildet ist.

Während die Aluminiumlegierung mit niederem Zinngehalt ebenfalls bereits vor Erreichen der Maximalbelastung zum Zeitpunkt 20 ausfällt, widersteht die höher legierte Aluminiumlegierung über einen längeren Zeitraum der Maximalbelastung bis zu einem Zeitpunkt 21, zu dem das Lager verquetscht bzw. bis zu einem Zeitpunkt 22, zu dem das Lager verrieben ist.

Sehr hohe Standzeiten eines Lagers werden, wie aus dem Stand der Technik bekannt, durch einen Lageraufbau gemäß Beispiel 3 erreicht, da ein derartiges Lager nach einer Laufzeit von 10.000 Minuten, zu welcher auch der Zeitpunkt 23 dafür eingetragen ist, noch immer verwendungsfähig ist.

Derartige Lager, die bei diesem Vergleichstest eine derart hohe Lagerstandzeit erreichen, werden auch als "Durchläufer" bezeichnet.

Schließlich zeigen die Zeitpunkte 24 und 25 die Versuchsergebnisse für einen Lageraufbau, gemäß Beispiel 4, bei welchem die Zwischenschichte 18 aus Reinaluminium und die Laufschichte 13 aus der erfindungsgemäßen Aluminiumlegierung besteht. Damit konnte gegenüber der Ausgestaltung des Lagers nach Beispiel 3 eine wesentliche Erhöhung der Lagerstandzeit mit einem wesentlich einfacheren Lageraufbau erzielt werden.

Ebenfalls verwendbar ist eine Ausgestaltung, bei der die Zwischenschichte 18 als Hauptlegierungselement Zink und die Laufschichte 13 als Hauptlegierungselement Zinn 14 enthält, wie es ebenfalls im Beispiel 4 angegeben ist.

Bei einem weiteren Versuch wurde auf die Stützlage 12 aus Stahl eine Zwischenschichte 18 aus AlZn4,5 eine Laufschichte 13 aus AlSn20Cu aufgebracht. Ein derartig ausgebildetes Gleitlager 11 zeigt, daß es bis zum Zeitpunkt 26 betriebsbereit ist.

Das beste Ergebnis wird jedoch bei einem Lageraufbau erreicht, bei dem die Stützlage 12 wiederum aus Stahl und die Zwischenschichte 18 aus einer Aluminium-Zink-Legierung, insbesondere AlZn4,5 besteht, auf der eine Laufschichte 13 mit der erfindungsgemäßen Aluminiumlegierung aufgebracht ist.

Überraschend war für den Fachmann jedoch, daß bei dieser Kombination, bei der die Zwischenschichte 18 mit Zink legiert ist und die erfindungsgemäße Laufschichte 13 verwendet wird, mit einem gegenüber dem Lageraufbau nach Beispiel 3 erheblich einfacheren und damit auch billigeren Lageraufbau ebenfalls ein "Durchläufer" - im Schaubild mit einem Zeitpunkt 27 eingetragen - erreicht werden konnte.

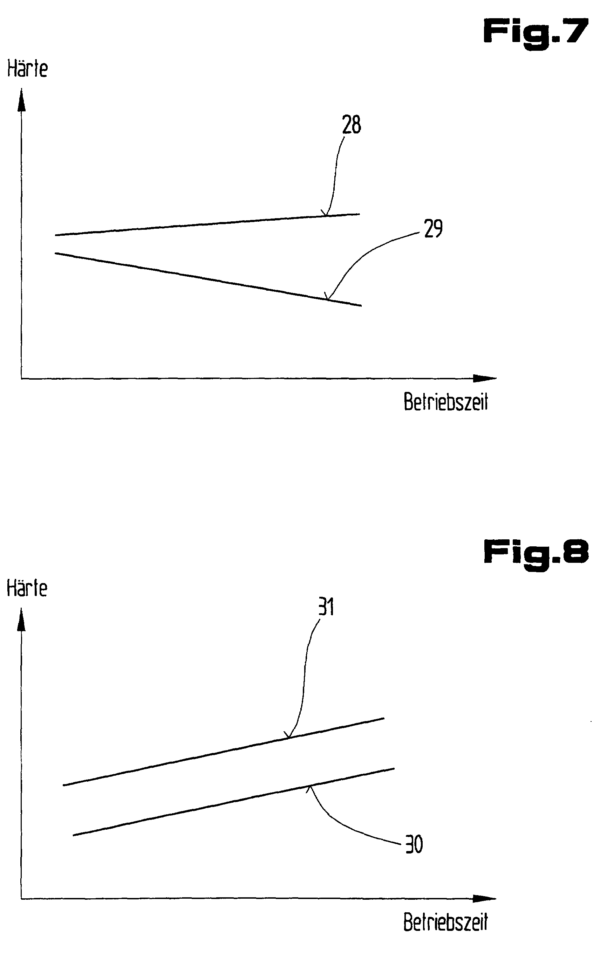

In den Fig. 7 und 8 ist die sich über die Betriebszeit eines Gleitlagers verändernde Härte in Form von Schaubildern gezeigt, wobei der Härteverlauf in Abhängigkeit zur unterschiedlichen Zusammensetzung zwischen Laufschichte 13 und Zwischenschichte 18 steht.

Da die Stützlage 12 aus Stahl immer gleich ist, wird dies in der Betrachtung nicht weiter berücksichtigt, da auch die Härte dieser Stahllage sich über die Betriebsdauer kaum verändert.

Wesentlich hierbei ist vielmehr, daß sich je nach der Legierung der Lauf- und Zwischenschichten 13 bzw. 18 eine unterschiedliche Härte ergibt.

Wie bereits zuvor erläutert, ist es für einen lang andauernden störungsfreien Betrieb und für eine lange Lagerstanddauer vorteilhaft, wenn die Härteänderungen in der Zwischenschichte 18 und der Laufschichte 13 in etwa gleichartig verlaufen, d.h. nur geringe Differenzen zwischen 0 % und 20 % bei der sich über die Betriebsdauer verändernden Härte auftreten. Für die Praxis günstige Ergebnisse werden dabei erzielt wenn, wie in Schaubild gemäß Fig. 7 gezeigt, die erfindungsgemäße Aluminiumlegierung, die mit einem hohen Zinnanteil versehen ist, als Laufschichte 13 und Reinaluminium als Zwischenschichte 18 verwendet wird. Bei diesem Ausführungsbeispiel zeigt sich, daß durch die Aushärtung der erfindungsgemäßen Aluminiumlegierung die Härte über die Betriebsdauer zunimmt, wogegen, wie aus dem Stand der Technik bereits bekannt, das Reinaluminium aufgrund der Wärme- und Druckeinwirkungen seine Verspannungen, die eine höhere Festigkeit bewirken, verliert und mit zunehmender Betriebszeit weicher wird. Durch die Wahl der Härtezunahme der Laufschichte 13 im Verhältnis zur Härteabnahme der Zwischenschichte 18 kann aber trotzdem noch ein positives Gesamtergebnis erzielt werden, welches eine hohe Lagerstanddauer unter Einhaltung der Grenzwerte bei der Härteveränderung über die Betriebszeit ermöglicht.

Der Verlauf der Härtezu- bzw. -abnahme ist im Schaubild in Fig. 7 für die Laufschichte 13 durch die Diagrammlinie 28 und für die Zwischenschichte 18 durch die Diagrammlinie 29 gezeigt.
Ein für den Fachmann überraschend positives Ergebnis bringt jedoch ein Lageraufbau hinsichtlich des Härteverlaufs über die Betriebsdauer, wenn, wie im Schaubild in Fig. 8 gezeigt, die Laufschichte 13 gemäß Diagrammlinie 30 und die Zwischenschichte 18, wie die Diagrammlinie 31 zeigt, aushärtbar sind und durch die Temperatureinwirkung über die Betriebsdauer deren Härte zunimmt, wodurch nur geringe bis überhaupt keine Differenzen bei den Härteveränderungen über die Betriebsdauer auftreten. Dies wird durch die erfindungsgemäße, mit hohem Zinnanteil versetzte und mit zusätzlichen Legierungselementen legierte Aluminiumlegierung in der Laufschichte 13 und durch die mit Zinn 14 legierte Aluminiumlegierung der Zwischenschichte 18 erreicht, die wie bereits zuvor erwähnt, durch Umformung und Plattieren miteinander und die Zwischenlage 18 mit der Stützlage 12 aus Stahl verbunden sind.

Gleichzeitig sieht man aus diesem Schaubild in Fig. 8, daß in diesem Fall durch die höhere Härte der Zwischenlage, wie im übrigen auch das Lagerstandverhalten im Diagramm nach Fig. 6 zeigt, eine hohe Standzeit eines derartigen Lagers erreicht wird.

### Bezugszeichenaufstellung

- 1: Werkstoff
- 2: Zinnphase
- 3: Legierungsmatrix
- 4: Zinn-Netz
- 5: Lagerwerkstoff

- 6: Zinnstruktur
- 7: Aluminid
- 8: Längserstreckung
- 9: Länge
- 10: Lagerelement

- 11: Gleitlager
- 12: Stützlage
- 13: Laufschichte
- 14: Zinn
- 15: Hartstoff

- 16: Element

- 18: Zwischenschichte
- 19: Zeitpunkt
- 20: Zeitpunkt

- 21: Zeitpunkt
- 22: Zeitpunkt
- 23: Zeitpunkt
- 24: Zeitpunkt
- 25: Zeitpunkt

- 26: Zeitpunkt
- 27: Zeitpunkt
- 28: Diagrammlinie
- 29: Diagrammlinie
- 30: Diagrammlinie

- 31: Diagrammlinie

## Patentansprüche

1. Lagerwerkstoff (5) auf Aluminiumbasis für Gleitlager (11) der als Hauptlegierungselement zwischen 16 Gew.-% und 32 Gew.-% Zinn (14) enthält und dem weiters zumindest 1,4 Gew.-% Kupfer und zumindest zwei Elemente (16) aus der Gruppe Mangan, Nickel und Eisen mit einem Gewichtsteil zwischen 40 % und 200 % der Kupfermenge zulegiert sind und der wahlweise zwischen 0,1 und 1,5 % Chrom (bezogen auf die Legierungsmatrix (3)), Kobalt bis zu einem Verhältnis von 1:1 bis 0,25:1 zu Eisen, zwischen 0,1 % bis 1 % bezogen auf die Legierungsmatrix Zirkon, zumindest ein Element (16) aus der Gruppe Magnesium, Antimon, Wolfram, Niob, Vanadium, Molybdän, Silber mit einem Gesamtanteil zusammen mit Chrom, Kobalt und Zirkon von höchstens 200 % des Eisen- bzw. Nickelgehaltes mindestens aber 0,2 Gew.-% der Legierungsmatrix (3), höchstens 10 % eines Elementes (16) aus der Gruppe Cadmium, Indium, Blei und Wismut und Silizium und Titan mit einem Gesamtanteil von weniger als 100 % des Kupfergehaltes enthält und den Rest Aluminium mit den üblichen Verunreinigungen bildet, wobei die neben Zinn (14) weiteren Legierungselemente annähernd kugel- bzw. wüfelförmige Aluminide (7) in einem Volumsanteil von 0,15 % bis 5 % einer unterbrochenen Zinn-Netzwerkstruktur bilden und mindestens 15 % der Zinnpartikel in einem Größenverhältnis von 1:1 zu intermetallischen Phasen vorliegen.

2. Lagerwerkstoff (5) nach Anspruch 1, dadurch gekennzeichnet, daß zwischen 22 Gew.-% und 28 Gew.-% Zinn enthalten sind.

3. Lagerwerkstoff (5) nach Anspruch 1 oder 2, dadurch gekennzeichnet, daß der Gewichtsanteil der beiden Elemente (16) aus der Mangan, Nickel und Eisen enthaltenden Elementgruppe zwischen 45 % und 100 % der Kupfermenge ausmacht.

4. Lagerwerkstoff (5) nach einem der vorhergehenden Ansprüche, dadurch gekennzeichnet, daß der Anteil des jeweiligen Elementes (16) aus der Blei, Wismut, Cadmium und Indium enthaltenden Elementengruppe zwischen 25 Gew.-% und 200 Gew.-% der maximalen Löslichkeit des jeweiligen Elementes (16) in der gesamten Zinnmenge, der Gesamtanteil der Elemente aus dieser Gruppe aber mindestens 100 % und höchstens 300 % der maximalen Löslichkeit des am wenigsten in Zinn (14) löslichen Gruppenelementes beträgt.

5. Lagerwerkstoff (5) nach einem der Ansprüche 1 bis 3, dadurch gekennzeichnet, daß der Anteil des jeweiligen Elementes (16) aus der Blei, Wismut, Cadmium und Indium enthaltenden Elementengruppe bei Cadmium zwischen dem 1,1- und 2,2-fachen, bei Wismut zwischen dem 2- und 13,5-fachen, bei Indium zwischen dem 1,25- und 45-fachen und bei Blei zwischen dem 1,25- und 14-fachen der jeweiligen maximalen Löslichkeit dieser Elemente in Aluminium beträgt.

6. Lagerwerkstoff (5) nach einem der vorhergehenden Ansprüche, dadurch gekennzeichnet, daß der Anteil an Mangan zwischen 10 % und 100 % der maximalen Löslichkeit in der gesamten Aluminiummenge ausmacht.

7. Lagerwerkstoff (5) nach einem der vorhergehenden Ansprüche, dadurch gekennzeichnet, daß mehrere der Elemente (16) Silicium, Chrom, Magnesium, Wolfram, Titan, Antimon, Niob, Vanadium, Kobalt, Molybdän und Zirkon zugesetzt sind und deren Gesamtgehalt kleiner 100 % des Gehaltes an Kupfer ist.

8. Lagerwerkstoff (5) nach einem oder mehreren der vorhergehenden Ansprüche, dadurch gekennzeichnet, daß das Verhältnis Mangan zu Eisen zwischen 4 : 1 und 2,5 : 1 liegt.

9. Lagerwerkstoffe (5) nach Anspruch 8, dadurch gekennzeichnet, daß das Verhältnis Mangan zu Eisen zwischen 3,5 : 1 und 2,5 : 1 liegt.

10. Lagerwerkstoff (5) nach einem der vorhergehenden Ansprüche, dadurch gekennzeichnet, daß bezogen auf die Legierungsmatrix (3) mindestens 0,15 % und nicht mehr als 0,8 % Chrom enthalten sind.

11. Lagerwerkstoff (5) nach einem der vorhergehenden Ansprüche, dadurch gekennzeichnet, daß der Anteil an der Legierungsmatrix (3) an Zirkon zwischen 0,15 % und 0,5 % beträgt.

12. Lagerwerkstoff (5) nach einem der vorhergehenden Ansprüche, dadurch gekennzeichnet, daß bezogen auf die Legierungsmatrix (3) Nickel und Chrom in einem Verhältnis von 0,5: 1 zugesetzt sind.

13. Lagerwerkstoff (5) nach einem der vorhergehenden Ansprüche, dadurch gekennzeichnet, daß das Verhältnis Kobalt zu Eisen zwischen 0,75 : 1 bis 0,5 : 1 beträgt.

14. Verbundwerkstoff, insbesondere Gleitlager (11) aus einer Lauf- und einer Zwischenschichte (13, 18), wobei die Laufschichte (13) aus einer Aluminiumlegierung mit dem Hauptlegierungselement Zinn (14) und die Zwischenschichte (18) aus einer Aluminiumlegierung mit dem Hauptlegierungselement Zink besteht, dadurch gekennzeichnet, daß die Aluminiumlegierung der Laufschichte (13) durch einen Lagerwerkstoff (5) nach einem der vorhergehenden Ansprüche 1 bis 13 gebildet ist.

15. Verbundwerkstoff nach Anspruch 14, dadurch gekennzeichnet, daß der Lauf- und/ oder der Zwischenschichte (13, 18) eine Menge an Mangan, Kupfer, Chrom und/oder Eisen und/oder Nickel zur Einhaltung einer Differenz zwischen den Festigkeitsänderungen in der Lauf- und/oder Zwischenschichte (13, 18) bei annähernd gleicher Druck- und/oder Temperaturbelastung zwischen 0 % und 20 % zugesetzt ist.

16. Verbundwerkstoff nach Anspruch 14 oder 15, dadurch gekennzeichnet, daß die Laufschichte (13) und/oder die Zwischenschichte (18) aushärtbar ist, z.B. durch Wärmeaushärtung, und eine Festigkeit der Zwischenschichte (18) gleich oder höher ist als die Festigkeit der Laufschichte (13).

17. Verbundwerkstoff nach einem der Ansprüche 14 bis 16, dadurch gekennzeichnet, daß die Lauf- und die Zwischenschichte (13, 18) durch z.B. Plattieren, Anformen, Klemmen, Kleben, Umformen miteinander verbunden sind.

18. Verbundwerkstoff nach einem der Ansprüche 14 bis 17, dadurch gekennzeichnet, daß ein Aushärtungseffekt der Laufschichte (13) unterhalb von einer Temperatur von 120°C höchstens 15 % der bei einer Aushärtungstemperatur von max. 450°C erreichbaren Höchstfestigkeit beträgt.

19. Verbundwerkstoff nach Anspruch 18, dadurch gekennzeichnet, daß der Aushärtungseffekt der Laufschichte (13) höchstens 15 % der bei der Aushärtungstemperatur von 150°C bis 375°C erreichbaren Höchstfestigkeit beträgt.

20. Gleitlager (11) aus einem Verbundwerkstoff, bestehend aus einer Laufschichte (13) und einer Zwischenschichte (18) und gegebenenfalls einer Stützlage (12), dadurch gekennzeichnet, daß die Laufschichte (13) durch einen Lagerwerkstoff (5) nach einem der Ansprüche 1 bis 13 gebildet ist.

21. Gleitlager (11) nach Anspruch 20, dadurch gekennzeichnet, daß die Zwischenschichte (18) aus Reinaluminium gebildet ist.

22. Gleitlager (11) nach Anspruch 20, dadurch gekennzeichnet, daß die Zwischenschichte (18) durch eine Aluminiumlegierung gebildet ist, der als Hauptlegierungselemente zumindest ein Element (16) einer Eisen, Mangan, Nickel, Chrom, Kobalt, Kupfer, Platin, Magnesium, Antimon oder Silber enthaltenden Elementengruppe zugesetzt ist.

23. Verfahren zur Herstellung von Verbundwerkstoffen aus einer Aluminiumlegierung, insbesondere für ein Gleitlager (11), bei dem weiche Phasen enthaltende, aushärtbare Aluminiumlegierungen mit durch Hartstoffe (15) bildende Legierungselementen legiert sind, dadurch gekennzeichnet, daß die Aluminumlegierung durch einen Lagerwerkstoff (5) nach einem der Ansprüche 1 bis 13 gebildet und der Gußvorgang so durchgeführt wird, daß annähernd kugel- bzw. würfelförmige Aluminide (7) in einem Volumsanteil von 0,15 % bis 5 % einer unterbrochenen Zinn-Netzwerkstruktur entstehen und daß diese auf maximal 70 % der mittleren Umfangslänge der sichtbaren Matrixkorngrenzen beschränkt sind und daß durch die gewählten Parameter mindestens 15 % der Zinnpartikel mit intermetallischen Phasen in einem Größenverhältnis von 1 : 1 vorliegen.

24. Verfahren nach Anspruch 23, dadurch gekennzeichnet, daß die intermetallischen Phasen auf 20 % bis 60 % der mittleren Umfangslänge der sichtbaren Matrixkorngrenzen beschränkt sind.

25. Verfahren nach Anspruch 23 oder 24, dadurch gekennzeichnet, daß die intermetallischen Phasen nach einer Plattierung mit einer weiteren Schichte einer Legierung bei einer Temperatur von mindestens 365°C thermisch behandelt werden und während einer nachfolgenden zwangsweisen Abkühlung die intermetallischen Phasen mit Ausnahme der Eisen-Kobalt- und Mangan-Kobalt-reichen intermetallischen Phasen aufgelöst werden, bis eine Matrix-Härte von maximal 43 Hb 2,5/31,25 erreicht ist.

26. Verfahren nach Anspruch 25, dadurch gekennzeichnet, daß die thermische Behandlung bei einer Temperatur zwischen 370°C und 545°C durchgeführt wird.

27. Verfahren nach einem der Ansprüche 23 bis 26, dadurch gekennzeichnet, daß nach Umformung der intermetallischen Phasen die Schichte einer Kaltumformung von mindestens 25 % unterworfen wird, wonach durch eine thermische Behandlung bei mindestens 145°C thermisch nachverdichtet wird, wobei die thermische Behandlung durch maximal 3 Stunden bei der jeweiligen Temperatur, jedoch höchstens 50°C unter der jeweiligen Kühltemperatur erfolgt, bis mindestens 75 % der bei maximaler Aushärtung erreichbaren Festigkeit erreicht sind.

28. Verfahren nach Anspruch 27, dadurch gekennzeichnet, daß die thermische Nachverdichtung bei einer Temperatur zwischen 155°C und 180°C erfolgt.

29. Verfahren nach Anspruch 27 oder 28, dadurch gekennzeichnet, daß der aus einer Lauf- und/oder Zwischenschichte (13, 18) und/oder Stützlage (12) gebildete Werkstoffverbund einer Aushärtung unterzogen wird, wobei ein Aushärtungseffekt der Laufschichte unterhalb einer Temperatur von 120°C höchstens 10 % der bei einer Aushärtungstemperatur von maximal 450°C erreichbaren Höchstfestigkeit bewirkt wird.

30. Verfahren nach Anspruch 29, dadurch gekennzeichnet, daß die Aushärtungstemperatur zwischen 150°C bis 375°C beträgt.

## Claims

1. Plain bearing material (5) having an aluminium base for plain bearings (11), containing tin (14) in an amount of between 16% by weight and 32% by weight as the main alloying element and which is additionally alloyed with at least 1.4% by weight of copper and at least two elements (16) from the group consisting of manganese, nickel and iron in a proportion by weight of between 40% and 200% of the copper quantity and which optionally contains between 0.1 and 1.5% of chromium (relative to the alloy matrix (3)), a ratio of up to 1:1 to 0.25:1 of cobalt to iron, zirconium between 0.1% to 1% relative to the alloy matrix, at least one element (16) from the group consisting of magnesium, antimony, tungsten, niobium, vanadium, molybdenum, silver in a total proportion, in conjunction with chromium, cobalt and zirconium of at most 200% of the iron or nickel content but at least 0.2% by weight of the alloy matrix (3), at most 10% of an element (16) from the group consisting of cadmium, indium, lead and bismuth and silicon and titanium in a total proportion of less than 100% of the copper content, the remainder being aluminium with the usual impurities, wherein the other alloying elements in addition to tin (14) form approximately spherical or cube-shaped aluminide (7) in a proportion by volume of from 0.15% to 5% of an interrupted tin network structure and at least 15% of the tin particles are present in a size ratio of 1:1 to inter-metallic phases.

2. Plain bearing material (5) as claimed in claim 1, characterised in that it contains between 22% by weight and 28% by weight of tin.

3. Plain bearing material (5) as claimed in claim 1 or 2, characterised in that the proportion by weight of the two elements (16) from the group of elements consisting of manganese, nickel and iron represent between 45% and 100% of the copper quantity.

4. Plain bearing material (5) as claimed in one of the preceding claims, characterised in that the proportion of the respective element (16) from the group of elements consisting of lead, bismuth, cadmium and indium represents between 25% by weight and 200 % by weight of the maximum solubility of the respective element (16) in the total tin quantity, but the total proportion of the elements from this group representing at least 100% and at most 300% of the maximum solubility of the group element that is at least soluble in tin (14).

5. Plain bearing material (5) as claimed in one of claims 1 to 3, characterised in that the proportion of the respective element (16) from the group of elements consisting of lead, bismuth, cadmium and indium represents in the case of cadmium between 1.1 and 2.2 times, in the case of bismuth between 2 and 13.5 times, in the case of indium between 1.25 and 45 times and in the case of lead between 1.25 and 14 times the respective maximum solubility of these elements in aluminium.

6. Plain bearing material (5) as claimed in one of the preceding claims, characterised in that the proportion of manganese is between 10% and 100% of the maximum solubility in the total aluminium quantity.

7. Plain bearing material (5) as claimed in one of the preceding claims, characterised in that several of the elements (16) silicon, chromium, magnesium, tungsten, titanium, antimony, niobium, vanadium, cobalt, molybdenum and zirconium are added and their total content is less than 100% of the copper content.

8. Plain bearing material (5) as claimed in one or of the preceding claims, characterised in that the ratio of manganese to iron is between 4:1 and 2.5:1.

9. Plain bearing material (5) as claimed in claim 8, characterised in that the ratio of manganese to iron is between 3.5:1 and 2.5:1.

10. Plain bearing material (5) as claimed in one of the preceding claims, characterised in that the content of chromium relative to the alloy matrix (3) is at least 0.15% and not more than 0.8%.

11. Plain bearing material (5) as claimed in one of the preceding claims, characterised in that the proportion of zirconium in the alloy matrix (3) is between 0.15% and 0.5%.

12. Plain bearing material (5) as claimed in one of the preceding claims, characterised in that nickel and chromium are added in a ratio of 0.5:1 relative to the alloy matrix (3).

13. Plain bearing material (5) as claimed in one of the preceding claims, characterised in that the ratio of cobalt to iron is between 0.75:1 and 0.5:1.

14. Multilayered material, in particular a plain bearing (11) comprising an antifriction and an intermediate layer (13, 18), the antifriction layer (13) being made from an aluminium alloy with tin (14) as the main alloying element and the intermediate layer (18) being made from an aluminium alloy with zinc as the main alloying element, characterised in that the aluminium alloy of the antifriction layer (13) is made from a plain bearing material (5) as claimed in one of the preceding claims 1 to 13.

15. Multilayered material as claimed in claim 14, characterised in that a quantity of between 0% and 20% of manganese, copper, chromium and/or iron and/or nickel is added to the antifriction and/or the intermediate layers (13, 18) in order to maintain a difference between the changes in hardness occurring in the antifriction and/or intermediate layers (13, 18) under approximately the same pressure and/or temperature conditions.

16. Multilayered material as claimed in claim 14 or 15, characterised in that the antifriction layer (13) and/or the intermediate layer (18) can be hardened by heat hardening and a hardness of the intermediate layer (18) is the same as or greater than the hardness of the antifriction layer (13).

17. Multilayered material as claimed in one of claims 14 to 16, characterised in that the antifriction and intermediate layers (13, 18) are joined to one another, for example, by plating, pressing, clamping, bonding, forming, amongst others.

18. Multilayered material as claimed in one of claims 14 to 17, characterised in that a hardening effect of the antifriction layer (13) at a temperature below 120°C represents at most 15% of the maximum hardness obtainable at a hardening temperature of 450°C maximum.

19. Multilayered material as claimed in claim 18, characterised in that the hardening effect of the antifriction layer (13) represents at most 15% of the maximum hardness obtainable at a hardening temperature of from 150°C and 375°C.

20. Plain bearing (11) made from a multilayered material consisting of an antifriction layer (13) and an intermediate layer (18) and optionally a base layer (12), characterised in that the antifriction layer (13) is made from a plain bearing material (5) as claimed in one of claims 1 to 13.

21. Plain bearing (11) as claimed in claim 20, characterised in that the intermediate layer (18) is made from pure aluminium.

22. Plain bearing (11) as claimed in claim 20, characterised in that the intermediate layer (18) is made from an aluminium alloy to which at least one element (16) from a group consisting of iron, manganese, nickel, chromium, cobalt, copper, platinum, magnesium, antimony or silver is added as the main alloying element.

23. Method of producing multilayered materials from an aluminium alloy, in particular for a plain bearing (11), in which aluminium alloys containing soft phases are alloyed with alloying elements containing hard materials (15), characterised in that the aluminium alloy is a plain bearing material (5) as claimed in one of claims 1 to 13 and the casting process is operated so that approximately spherical or cube-shaped aluminides (7) occur in a proportion by volume of from 0.15% to 5% of an interrupted tin network structure and in that this is limited to a maximum of 70% of the median peripheral length of the visible matrix grain boundaries and the parameters are selected so that at least 15% of the tin particles are present in a size ratio of 1:1 with inter-metallic phases.

24. Method as claimed in claim 23, characterised in that the inter-metallic phases are limited to 20% to 60% of the median peripheral length of the visible matrix grain boundaries.

25. Method as claimed in claim 23 or 24, characterised in that the inter-metallic phases are heat treated with another layer of an alloy at a temperature of at least 365°C and, during a subsequent forced cooling treatment, the inter-metallic phases are dissolved with the exception of the inter-metallic phases rich in iron-cobalt and manganese-cobalt until a matrix hardness of a maximum of 43 Hb 2.5/31.25 is obtained.

26. Method as claimed in claim 25, characterised in that the heat treatment is conducted at a temperature of between 370°C and 545°C.

27. Method as claimed in one of claims 23 to 26, characterised in that after forming the inter-metallic phases, the layer is subjected to a cold forming process of at least 25%, after which it is thermally re-compressed by a heat treatment at a temperature of at least 145°C, the heat treatment being effected for a maximum of 3 hours at the respective temperature but at most 50°C below the respective cooling temperature until at least 75% of the hardness achievable at maximum hardening is obtained.

28. Method as claimed in claim 27, characterised in that the thermal re-compression is conducted at a temperature of between 155°C and 180°C.

29. Method as claimed in claim 27 or 28, characterised in that the material joint comprising an antifriction and/or intermediate layer (13, 18) and/or base layer (12) is subjected to a hardening process at a temperature of less than 120°C during which a hardening effect of the antifriction layer is equivalent to at most 10% of the hardness obtainable at a temperature of a maximum of 450°C.

30. Method as claimed in claim 29, characterised in that the hardening temperature is between 150°C and 375°C.

## Revendications

1. Matériau de palier (5) à base d'aluminium pour des paliers à glissement (11) qui comprend comme élément d'alliage principal entre 16% en poids et 32% en poids d'étain (14) et auquel sont ajoutés en outre au moins 1,4% en poids de cuivre et au moins deux éléments (16) du groupe manganèse, nickel et fer avec une part en poids entre 40% et 200% de la quantité de cuivre, et qui contient sélectivement entre 0,1 et 1,5% de chrome (rapporté à la matrice d'alliage 3)), du cobalt jusqu'à un rapport de 1:1 à 0,25:1 au fer, entre 0,1% à 1% rapporté à la matrice d'alliage du zirconium, au moins un élément (16) du groupe magnésium, antimoine, tungstène, niobium, vanadium, molybdène, argent avec une part totale ensemble avec le chrome, le cobalt et le zirconium au maximum de 200% de la teneur en fer respectivement en nickel, cependant au moins 0,2% en poids de la matrice d'alliage (3), au maximum 10% d'un élément (16) du groupe cadmium, indium, plomb et bismuth et silicium et titane avec une part totale inférieure à 100% de la teneur en cuivre, le reste étant formé par l'aluminium avec les impuretés usuelles, où les éléments d'alliage supplémentaires à côté de l'étain (14) forment des aluminures (7) approximativement en forme de bille ou de dé en une part volumique de 0,15% à 5% en une structure de réseau d'étain interrompue, et au moins 15% des particules d'étain sont présentes en un rapport de grandeur de 1:1 à des phases intermétalliques.

2. Matériau de palier (5) selon la revendication 1, caractérisé en ce que celui-ci contient entre 22% en poids et 28% en poids d'étain.

3. Matériau de palier (5) selon la revendication 1 ou 2, caractérisé en ce que la part en poids des deux éléments (16) du groupe d'éléments contenant du manganèse, du nickel et du fer représente entre 45% et 100% de la quantité de cuivre.

4. Matériau de palier (5) selon l'une des revendications précédentes, caractérisé en ce que la part de l'élément respectif (16) du groupe d'éléments contenant le plomb, le bismuth, le cadmium et l'indium représente entre 25% en poids et 200% en poids de la solubilité maximale de l'élément respectif (16) dans la quantité d'étain totale, la part totale des éléments de ce groupe représente cependant au moins 100% et au maximum 300% de la solubilité maximale de l'élément de groupe le moins soluble dans de l'étain (14).

5. Matériau de palier (5) selon l'une des revendications 1 à 3, caractérisé en ce que la part de l'élément respectif (16) du groupe d'éléments contenant du plomb, du bismuth, du cadmium et de l'indium représente pour le cadmium entre 1,1 et 2,2 fois, pour le bismuth entre 2 et 13,5 fois, pour l'indium entre 1,25 et 45 fois et pour le plomb entre 1,25 et 14 fois la solubilité maximale respective de ces éléments dans de l'aluminium.

6. Matériau de palier (5) selon l'une des revendications précédentes, caractérisé en ce que la part en manganèse représente entre 10% et 100% de la solubilité maximale dans la quantité d'aluminium totale.

7. Matériau de palier (5) selon l'une des revendications précédentes, caractérisé en ce que sont ajoutés plusieurs des éléments (16) silicium, chrome, magnésium, tungstène, titane, antimoine, niobium, vanadium, cobalt, molybdène et zirconium et leur teneur totale est plus petite que 100% de la teneur en cuivre.

8. Matériau de palier (5) selon l'une ou plusieurs des revendications précédentes, caractérisé en ce que le rapport manganèse à fer se situe entre 4:1 et 2:5:1.

9. Matériau de palier (5) selon la revendication 8, caractérisé en ce que le rapport manganèse à fer se situe entre 3,5:1 et 2,5:1.

10. Matériau de palier (5) selon l'une des revendications précédentes, caractérisé en ce que par rapport à la matrice d'alliage (3) sont contenus au moins 0,15% et non pas plus que 0,8% de chrome.

11. Matériau de palier (5) selon l'une des revendications précédentes, caractérisé en ce que la part à la matrice d'alliage (3) en zircone est comprise entre 0,15% et 0,5%.

12. Matériau de palier (5) selon l'une des revendications précédentes, caractérisé en ce que par rapport à la matrice d'alliage (3), le nickel et le chrome sont ajoutés selon un rapport de 0,5:1.

13. Matériau de palier (5) selon l'une des revendications précédentes, caractérisé en ce que le rapport du cobalt au fer est compris entre 0,75:1 jusqu'à 0,5:1.

14. Matériau de palier, notamment palier à glissement (11) à partir d'une couche de roulement et intermédiaire (13, 18), où la couche de roulement (13) est constituée d'un alliage d'aluminium avec l'élément d'alliage principal étain (14) et la couche intermédiaire 18 d'un alliage d'aluminium avec l'élément d'alliage principal zinc, caractérisé en ce que l'alliage d'aluminium de la couche de roulement (13) est formé par un matériau de palier (5) selon l'une des revendications précédentes 1 à 13.

15. Matériau de palier selon la revendication 14, caractérisé en ce qu'il est ajouté à la couche de roulement et/ou intermédiaire (13, 18) une quantité de manganèse, de cuivre, de chrome et/ou de fer et/ou de nickel pour respecter une différence entre les modifications de solidité dans la couche de roulement et/ou intermédiaire (13, 18), à une charge de pression et/ou de température approximativement constante entre 0% et 20%.

16. Matériau composite selon la revendication 14 ou 15, caractérisé en ce que la couche de roulement (13) et/ou la couche intermédiaire (18) est durcissable, par exemple par durcissement thermique, et une solidité de la couche intermédiaire (18) est égale ou supérieure à la solidité de la couche de roulement (13).

17. Matériau composite selon l'une des revendications 14 à 16, caractérisé en ce que les couches de roulement et intermédiaire (13, 18) sont reliées l'une à l'autre par exemple par placage, formage, serrage, collage, déformation.

18. Matériau composite selon l'une des revendications 14 à 17, caractérisé en ce qu'un effet de durcissement de la couche de roulement (13) en dessous d'une température de 120°C représente au maximum 15% de la solidité maximale pouvant être atteinte à une température de durcissement au maximum de 450°C.

19. Matériau composite selon la revendication 18, caractérisé en ce que l'effet de durcissement de la couche de roulement (13) représente au maximum 15% de la solidité maximale pouvant être atteinte à la température de durcissement de 150°C jusqu'à 375°C.

20. Palier à glissement (11) en un matériau composite, constitué d'une couche de roulement (13) et d'une couche intermédiaire (18) et le cas échéant d'une couche de support (12), caractérisé en ce que la couche de roulement (13) est réalisée par un matériau de palier (5) selon l'une des revendications 1 à 13.

21. Palier à glissement (11) selon la revendication 20, caractérisé en ce que la couche intermédiaire (18) est réalisée en aluminium pur.

22. Palier à glissement (11) selon la revendication 20, caractérisé en ce que la couche intermédiaire (18) est formée par un alliage d'aluminium auquel est ajouté comme élément d'alliage principal au moins un élément (16) d'un groupe d'éléments comprenant le fer, le manganèse, le nickel, le chrome, le cobalt, le cuivre, le platine, le magnésium, l'antimoine ou l'argent.

23. Procédé de fabrication de matériaux composites à partir d'un alliage d'aluminium, notamment pour un palier à glissement (11), où sont alliés des alliages d'aluminium durcissables, contenant des phases molles, avec des éléments d'alliage formant des substances dures (15), caractérisé en ce que l'alliage d'aluminium est réalisé par un matériau de palier (5) selon l'une des revendications 1 à 13 et en ce que l'opération de coulée est effectuée de façon à ce que des aluminures (7) approximativement en forme de bille respectivement de dé soient produits selon une part volumique de 0,15% à 5% d'une structure de réseau d'étain interrompue, et que ceux-ci sont limités au maximum à 70% de la longueur périphérique moyenne des limites de grain de matrice visibles, et en ce que par les paramètres choisis, au moins 15% des particules d'étain avec des phases intermétalliques sont présentes en un rapport de grandeur de 1:1.

24. Procédé selon la revendication 23, caractérisé en ce que les phases intermétalliques sont limitées à 20% jusqu'à 60% de la longueur périphérique moyenne des limites de grains de matrice visibles.

25. Procédé selon la revendication 23 ou 24, caractérisé en ce que les phases intermétalliques, après un placage avec une autre couche d'un alliage, sont traitées thermiquement à une température d'au moins 365°C et que, pendant un refroidissement forcé suivant, les phases intermétalliques sont dissoutes à l'exception des phases intermétalliques riches en fer-cobalt et manganèse-cobalt jusqu'à l'obtention d'une dureté de matrice au maximum de 43 Hb, 2,5/31,25.

26. Procédé selon la revendication 25, caractérisé en ce que le traitement thermique est effectué à une température entre 370°C et 545°C.

27. Procédé selon l'une des revendications 23 à 26, caractérisé en ce que, après la déformation des phases intermétalliques, la couche est soumise à une déformation à froid d'au moins 25%, à la suite de quoi, par un traitement thermique à au moins 145°C, on procède à une densification ou recompression thermique, où le traitement thermique est effectué au maximum pendant 3 heures à la température respective, cependant au maximum à 50°C sous la température de refroidissement respective jusqu'à ce qu'au moins 75% de la solidité pouvant être atteinte lors d'un durcissement maximal soient atteints.

28. Procédé selon la revendication 27, caractérisé en ce que la densification ou recompression thermique a lieu à une température entre 155°C et 180°C.

29. Procédé selon la revendication 27 ou 28, caractérisé en ce que le matériau composite formé par une couche de roulement et/ou intermédiaire (13, 18) et/ou une couche de support (12) est soumis à un durcissement, où est produit un effet de durcissement de la couche de roulement en dessous d'une température de 120°C au maximum de 10% de la solidité maximale pouvant être atteinte lors d'une température de durcissement au maximum de 450°C.

30. Procédé selon la revendication 29, caractérisé en ce que la température de durcissement est comprise entre 150°C et 375°C.
